**Europäisches Patentamt**

**European Patent Office**

**Office européen des brevets**

(19)

(11) Numéro de publication: **0 258 113**
**B1**

(12) ## FASCICULE DE BREVET EUROPEEN

(45) Date de publication du fascicule du brevet: ·
**18.10.89**

(51) Int. Cl.⁴: **F16F 15/12**, F16D 13/71

(21) Numéro de dépôt: **87401804.7**

(22) Date de dépôt: **03.08.87**

(54) **Dispositif amortisseur de torsion comportant deux parties coaxiales coopérant avec des ressorts à action circonférentielle.**

(30) Priorité: **21.08.86 FR 8611936**

(43) Date de publication de la demande:
**02.03.88 Bulletin 88/9**

(45) Mention de la délivrance du brevet:
**18.10.89 Bulletin 89/42**

(84) Etats contractants désignés:
**DE ES GB IT**

(56) Documents cités:
**FR-A- 2 571 461**
**FR-A- 2 576 985**
**GB-A- 2 083 592**
**GB-A- 2 123 925**

(73) Titulaire: **VALEO, 64 Avenue de la Grande Armée,
F-75017 Paris(FR)**

(72) Inventeur: **Casse, Pierre, 75bis, Chaussée Jules César,
F-95120 Ermont(FR)**
Inventeur: **Chasseguet, Gustave, 2 Avenue Tourne Vent,
F-95150 Taverny(FR)**

(74) Mandataire: **CABINET BONNET-THIRION, 95 Boulevard
Beaumarchais, F-75003 Paris(FR)**

ACTORUM AG

## Description

L'invention se rapporte à un dispositif amortisseur de torsion pour système de transmission de couple, tel qu'un embrayage, du type comportant deux parties coaxiales coopérant respectivement avec des ressorts à action circonférentielle pour absorber les variations du couple.

L'invention concerne plus particulièrement la structure des moyens d'engagement entre l'une des parties coaxiales et des socles pivotants sur lesquels sont montés lesdits ressorts.

Un Système de transmission de couple tel qu'un embrayage à friction, destiné à être intercalé entre le vilebrequin du moteur et l'arbre d'entrée de la boîte de vitesses, dans un véhicule automobile, comporte très généralement un dispositif amortisseur de torsion susceptible d'absorber les variations de ce couple, pour éviter que des vibrations et en particulier des vibrations sonores ne prennent naissance tout au long de la chaîne cinématique dans laquelle ledit dispositif amortisseur de torsion est inséré. Un tel dispositif amortisseur est souvent combiné au disque de friction de l'embrayage ou au volant d'intertie entraîné par le vilebrequin du moteur et faisant également fonction de plateau de réaction pour l'embrayage.

Ainsi, le brevet français No 2571461 décrit un tel dispositif amortisseur combiné à un volant d'inertie. Le volant comprend deux parties coaxiales entre lesquelles sont agencés des ressorts hélicoïdaux disposés circonférentiellement. Plus précisément, chaque ressort est maintenu entre des socles montés articulés entre deux flasques (autrement appelés rondelles de guidage) d'une première partie, en l'occurrence la partie menante, tandis que ces mêmes socles sont susceptibles d'être sollicités circonférentiellement avec possibilité d'articulation, par des voiles annulaires en tôle solidaires de la partie menée, la variation de compression des ressorts assurant l'absorption des variations de couple et un certain filtrage des vibrations de toutes sortes.

On prévoit deux voiles parallèles écartés d'une faible distance axiale, cet agencement formant par ailleurs un limiteur de couple.

Ce montage donne de bons résultats, principalement en raison de la présence des socles articulés qui permettent aux ressorts de fonctionner dans de meilleures conditions en évitant qu'ils ne soient soumis à des déformations radiales excessives, vers l'intérieur ou l'extérieur. Les socles sont en matière plastique moulée, relativement rigide.

Cependant, on a constaté que, dans certaines conditions de fonctionnement, les deux voiles précités pouvaient se décaler circonférentiellement et ne pas entrer simultanément en contact avec les socles. Il peut en résulter, outre un mauvais travail des ressorts, une détérioration de ces socles. Cette anomalie de fonctionnement peut aller jusqu'à provoquer une mise en travers d'un socle, se traduisant par une destruction rapide de celui-ci. L'invention a pour but de résoudre ce problème.

Dans cet esprit, l'invention concerne donc un dispositif amortisseur de torsion du type comportant deux parties coaxiales montées avec possibilité de rotation limitée l'une par rapport à l'autre, une première partie comportant deux flasques annulaires sensiblement parallèles et une seconde partie comportant deux voiles parallèles intercalés axialement entre les deux flasques et des ressorts disposés sensiblement circonférentiellement entre des socles montés sur ladite première partie avec possibilité de pivotement, chaque socle comportant sur sa face arrière, par rapport au ressort, une creusure à fond arrondi dans laquelle deux doigts parallèles, s'étendant sensiblement circonférentiellement et appartenant respectivement à deux bras radiaux desdits voiles, sont susceptibles de s'engager lors d'une rotation relative entre lesdites deux parties coaxiales, caractérisé par des moyens de solidarisation en rotation desdites voiles, adaptés pour la mise en correspondance circonférentielle, deux à deux, desdits bras radiaux et doigts des deux voiles. Lorsque les deux voiles font partie d'un agencement formant limiteur de couple, des moyens élastiques, tels qu'une ou plusieurs rondelles Belleville sont intercalés entre les deux voiles pour les repousser en direction de portées respectives parallèles de ladite seconde partie. Les voiles sont en contact frottant avec ces portées, par l'intermédiaire de garnitures de friction. Dans ce cas, les moyens de solidarisation en rotation des voiles sont tels que l'écartement entre ces derniers puisse varier en fonction de l'usure des garnitures.

L'invention sera mieux comprise et d'autres avantages de celle-ci apparaîtront plus clairement à la lumière de la description qui va suivre de deux modes de réalisation d'un dispositif amortisseur de torsion conforme à son principe, donnée uniquement à titre d'exemple, et faite en référence aux dessins annexés dans lesquels:

- la figure 1 est une vue générale d'un dispositif amortisseur de torsion formant volant d'inertie, incorporant les perfectionnements de l'invention et représenté en coupe;
- la figure 2 est une vue de détail selon la coupe II-II de la figure 1;
- la figure 3 est une vue de détail en coupe diamétrale des voiles précités, illustrant leur assemblage;
- la figure 4 est une vue partielle d'un second mode de réalisation possible, vu selon une demi-coupe radiale IV-IV de la figure 5; et
- la figure 5 est une coupe partielle, V-V de la figure 4, les ressorts à action circonférentielle et leurs socles n'étant pas représentés, pour ne pas surcharger le dessin.

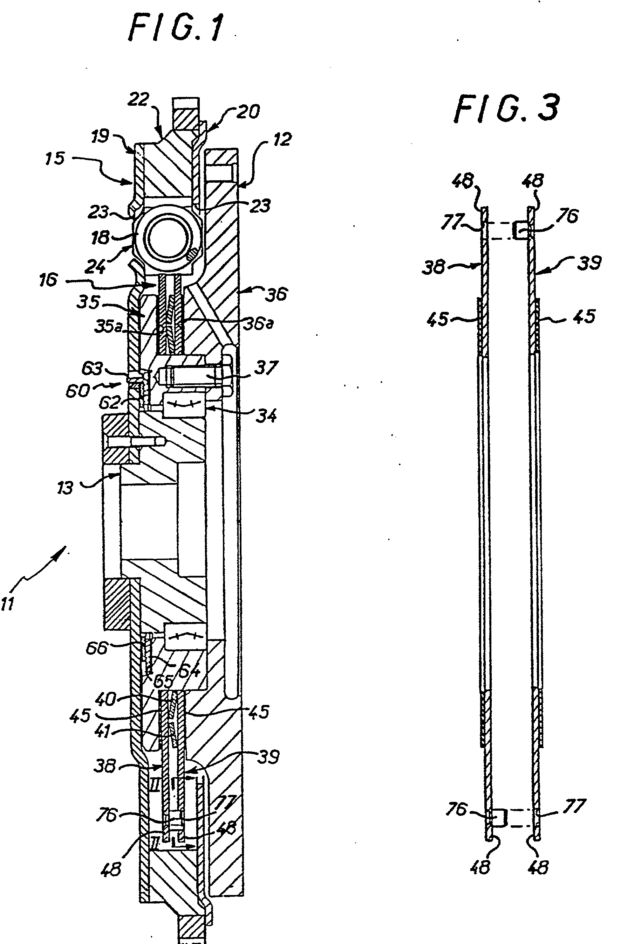

En se reportant plus particulièrement aux figures 1 à 3, on a représenté un volant d'inertie formant amortisseur de torsion 11, pour transmission de véhicule automobile, ce volant comportant une surface annulaire de contact 12 propre à lui faire jouer le rôle supplémentaire de plateau de réaction dans un embrayage à friction. A ce titre, le volant 11 est destiné à être fixé par son moyeu 13 au vilebrequin du moteur à combustion interne du véhicule automobile. Il comporte deux parties coaxiales 15 et 16, qui seront resepectivement appelées ci-dessous première et seconde parties, montées avec possibilité de rotation limitée l'une par rapport à l'autre à l'encontre, notamment, de la force exercée circonférentiellement entre elles par des ressorts hélicoïdaux 18. La première partie 15 ou partie menante, dont fait partie le moyeu 13, comporte deux flasques annulaires 19, 20, métalliques, communément appelés "rondelles de guidage". Le flasque 19 est fixé au moyeu 13. Le flasque 20, parallèle au flasque 19 est fixé extérieurement à celui-ci avec interposition d'une entretoise annulaire massive 22 portant la couronne de démarrage. Ces flasques comportent classiquement des fenêtres 23 allongées, s'étendant circonférentiellement. Chaque fenêtre d'un flasque est en regard d'une fenêtre symétrique de l'autre flasque de façon à définir des logements propres à abriter les ressorts 18. Chaque ressort 18 est monté dans un tel logement par l'intermédiaire de deux socles d'extrémité 24. Chaque socle 24 est monté avec possibilité de pivotement limité entre les flasques 19 et 20 ausquels il s'articule autour d'un axe parallèle à l'axe de rotation du volant amortisseur.

La seconde partie 16 est montée en rotation sur le moyeu 13 par un roulement à billes 34 et se compose d'une pièce annulaire 35, formant une sorte de moyeu et d'un plateau 36, fixé à la pièce annulaire 35 par des vis 37. Ce plateau constitue plus particulièrement le plateau de réaction de l'embrayage puisque sa face radiale externe forme la surface annulaire de contact 12 sur laquelle vient s'appliquer la friction d'embrayage (non représentée).

D'autre part, la pièce annulaire 35 et le plateau 36 comportent des portées annulaires radiales respectives, 35a, 36a parallèles tandis que deux voiles parallèles 38, 39, en tôle découpée, sont engagés dans l'espace défini par ces deux portées annulaires et repoussés axialement vers celles-ci, respectivement, par des moyens élastiques à action axiale, ici en l'occurrence deux rondelles Belleville 40, 41. Ici, la portée 35a est formée à la faveur d'une bride, s'étendant radialement en direction de l'entretoise 22, que possède la pièce 35 qui, par ailleurs, centre les voiles 38, 39. Chaque voile porte une garniture de friction annulaire 45 par laquelle il est en contact frottant avec la portée annulaire radiale correspondante. Les voiles intercalés axialement entre les deux flasques 19, 20 sont susceptibles de coopérer avec les socles 24 des ressorts (d'une façon qui sera décrite plus un détail ci-dessous) et l'agencement qui vient d'être décrit constitue un limiteur de couple autorisant un glissement rotatif entre lesdites première et seconde parties coaxiales, lorsque le couple transmis dépasse une valeur prédéterminée. Chaque voile 38, 39 comporte une partie annulaire plate portant les garnitures 45, prolongée vers l'extérieur par des bras radiaux 48 (autant que de ressorts) assujettis à se déplacer circonférentiellement entre les ressorts. Chaque bras 48 est muni de deux doigts 49 opposés, s'étendant sensiblement suivent une direction circonférentielle et faisant respectivement saillie des deux bords sensiblement radiaux 50 dudit bras. Chaque doigt 49 comporte une extrémité arrondie 51 susceptible d'entrer en contact pivotant avec le fond arrondi d'une creusure 55 du socle correspondant. Les socles sont en matière plastique moulée mais portent des blocs de matériau élastomère 56 servant de butées élastiques en cas de surcouples aboutissant à une compression excessive des ressorts.

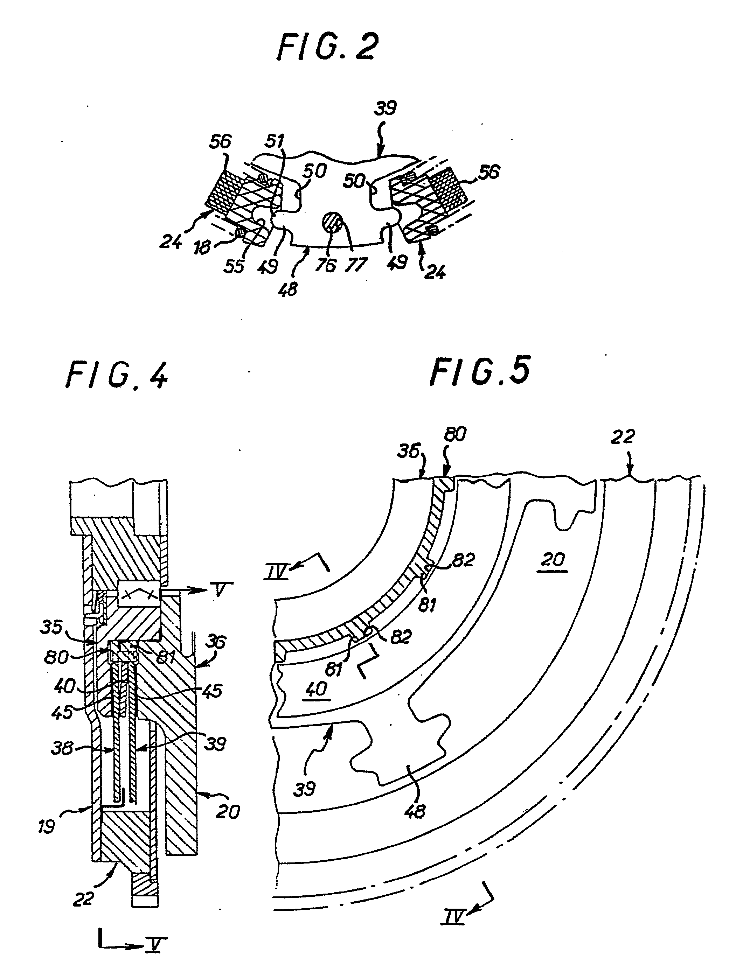

Comme le montre la figure 2, les ressorts n'interviennent pas dès le début du débattement angulaire entre les deux parties coaxiales, puisque les bras radiaux doivent effectuer une certaine course angulaire avant que certains de leurs doigts ne s'engagent dans les creusures des socles correspondants. Avant l'engagement desdits doigts au fond desdites socles, des moyens de frottement 60 (intervenant quant à eux dès le début du débattement angulaire entre les deux parties coaxiales) sont prévus entre lesdites parties coaxiales. Ces moyens de frottement se composent d'une rondelle de frottement 62 et d'une rondelle Belleville 66 formant ressort. La rondelle de frottement 62 est immobilisée en rotation par rapport à la première partie 15 par des pattes axiales 63 engagées dans des trous du flasque 19. Elle porte une garniture de friction 64 appliquée axialement contre un épaulement 65 de la pièce annulaire 35 de la seconde partie 16. La rondelle de frottement est sollicitée vers ledit épaulement par la rondelle Belleville 66 prenant appui entre celle-ci et le flasque 19.

Selon l'invention, on prévoit des moyens de solidarisation en rotation, des voiles 38, 39 agencés pour réaliser et maintenir la mise en correspondance circonférentielle, deux à deux, des bras radiaux 48 (et plus particulièrement de leurs doigts 49) des voiles 38, 39. Plus précisément, selon le mode de réalisation des figures 1 à 3, ces moyens de solidarisation en rotation consistent en au moins une projection 76, ici en forme de pion, parallèle à l'axe commun des deux parties coaxiales 15, 16, fixée à l'un des voiles et engagée dans un trou 77 correspondant de l'autre voile. Comme le montre la figure 3, au moins un tel ensemble projection 76-trou 77 est prévu entre chaque paire de bras radiaux, en correspondance, des voiles 38, 39. De plus, si chaque voile comporte un nombre pair de bras radiaux 48, de telles projections 76 peuvent être fixées, par exemple rivetées ou soudées par résistance, à un bras radial sur deux, circonférentiellement, les autres bras radiaux étant munis de trous 77 correspondants précités. Ainsi, les deux voiles 38, 39 sont strictement identiques en fabrication et peuvent néanmoins être assemblés, comme le montre la figure 3, en décalant un voile angulairement par rapport à l'autre de façon à faire correspondre les projections et les trous.

Sur les figures 4 et 5, où les éléments de structure analogue portent les mêmes références numériques, les moyens de solidarisation en rotation consistent en une bague 80, de préférence en matière plastique, logée dans la seconde partie 16 et plus précisément montée centrée sur la pièce annulaire 35 entre les portées 35a et 36a. Elle est munie de nervures longitudinales 81 sur sa surface externe, ces nervures étant engagées dans des découpes correspondantes 82 de chaque voile. Bien entendu, les découpes 82 sont telles que les bras radiaux 48 desdites voiles 38, 39, se trouvent en regard deux à deux, lorsque lesdites découpes sont engagées sur lesdites nervures. Là encore, les voiles 38, 39 peuvent coulisser le long de ces nervures, sous l'action de la rondelle Belleville 40, au fur et à mesure que les garnitures de friction 45 s'usent. Cet agencement élimine les risques d'incrustation des voiles dans la pièce annulaire 35 qui est ménagée et peut donc être choisie en un matériau plus économique.

Suivant une autre forme de réalisation possible, les moyens de solidarisation en rotation des deux voiles peuvent être constitués par au moins l'une des rondelles Belleville présentant des pattes axiales à sa périphérie externe et interne, engagées dans des trous correspondants des voiles. Cet agencement présente en outre l'avantage de centrer ladite rondelle Belleville indépendemment de la pièce 35, ce qui diminue les risques de grippage.

**Revendications**

1. Dispositif amortisseur de torsion du type comportant deux parties coaxiales (15, 16) montées avec possibilité de rotation limitée l'une par rapport à l'autre, une première partie (15) comportant deux flasques (19, 20) annulaires sensiblement parallèles et une seconde partie (16) comportant deux voiles (38, 39) parallèles intercalés axialement entre les deux flasques et des ressorts (18) disposés sensiblement circonférentiellement entre des socles (24) montés sur ladite première partie avec possibilité de pivotement, chaque socle comportant, sur sa surface arrière par rapport au ressort (18) une creusure (55) à fond arrondi dans laquelle deux doigts parallèles (49), s'étendant sensiblement circonférentiellement et appartenant respectivement à deux bras radiaux (48) desdits voiles (38, 39), sont susceptibles de s'engager lors d'une rotation relative entre lesdites deux parties coaxiales, caractérisé par des moyens de solidarisation en rotation (76, 77-80, 82) desdits voiles, adaptés pour la mise en correspondance circonférentielle, deux à deux, desdits bras radiaux et doigts des deux voiles précités.

2. Dispositif selon la revendication 1, caractérisé en ce que lesdits moyens de solidarisation en rotation consistent en au moins une projection (76) parallèle à l'axe commun des deux parties, fixée à l'un des voiles et engagée dans un trou (77) correspondant de l'autre voile.

3. Dispositif selon la revendication 2, caractérisé en ce qu'il comporte au moins une telle projection et un tel trou, agencés entre chaque paire de bras radiaux (48), en correspondance, desdits voiles.

4. Dispositif selon la revendication 3, caractérisé en ce que, pour chaque voile comportant un nombre pair de bras radiaux, de telles projections (76) sont fixées à un bras radial (48) sur deux, circonférentiellement, les autres bras radiaux étant munis de trous (77) correspondants.

5. Dispositif selon la revendication 1, caractérisé en ce que lesdits moyens de solidarisation en rotation consistent en une bague (80) de ladite seconde partie (16), munie de nervures longitudinales (81) sur sa surface externe et en ce que chaque voile comporte des découpes (82) correspondant auxdites nervures, pratiquées le long d'un bord circulaire interne de celui-ci, ce voile étant engagé à coulissement sur ladite bague et lesdites découpes (82) étant telles que les bras radiaux desdites voiles se trouvent en regard, deux à deux.

6. Dispositif selon l'une des revendications précédentes, caractérisé en ce que, de façon connue en soi, des moyens élastiques (40, 41) sont intercalés entre les deux voiles pour les repousser en direction de portées (35a, 36a), respectives parallèles de ladite seconde partie (16), de préférence avec interposition de garnitures de friction (45), cet agencement constituant un limiteur de couple.

7. Dispositif selon l'une des revendications précédentes, caractérisé en ce qu'il constitue un volant d'inertie formant plateau de réaction d'un embrayage à friction.

**Claims**

1. A torsional damper device of the kind comprising two coaxial parts (15, 16) mounted with the possibility of a limited degree of rotation relative to each other, a first part (15) comprising two substantially parallel annular flanges (19, 20) and a second part (16) comprising two parallel plates (38, 39) disposed axially between the two flanges, and springs (18) disposed substantially circumferentially between base members (24) mounted on the said first part so that they are able to pivot, each base member comprising on its rear surface relative to the spring (18) a recess (55) with a rounded bottom in which two parallel fingers (49), which extend substantially circumferentially and form part, respectively, of two radial arms (48) of the said plates (38, 39), can engage during a relative rotation between the said two coaxial parts, characterized by means (76, 77-80, 82) for fastening the said plates in rotation which are adapted to put the said radial arms and fingers of the two aforementioned plates in circumferential correspondence in pairs.

2. A device according to Claim 1, characterized in that the said means for fastening in rotation consist of at least one projection (76) parallel to the common axis of the two parts which is fixed to one of the plates and is engaged in a corresponding hole (77) in the other plate.

3. A device according to Claim 2, characterized in that it comprises at least one such projection and one such hole formed between each pair of corresponding radial arms (48) of the said plates.

4. A device according to Claim 3, characterized in that in the case of each plate comprising an even number of radial arms (48), such projections (76) are attached to circumferentially alternate radial arms (48), the other radial arms being provided with corresponding holes (77).

5. A device according to Claim 1, characterized in that the said means for fastening in rotation consist of a ring (80) of the said second part (16) provided with longitudinal ribs (81) on its outer surface and in that each plate comprises cut out portions (82) corresponding to the said ribs which are made along an inner circular edge of the plate, the plate being slidably engaged on the said ring and the said cut out portions (82) being such that the radial arms of the said plates face each other in pairs.

6. A device according to any one of the preceding Claims, characterized in that, in a known manner, spring means (40, 41) are disposed between the two plates to push them towards respective parallel bearing surfaces (35a, 36a) on the said second part (16), preferably with the interposition of friction facings (45), this arrangement constituting a torque limiter.

7. A device according to any one of the preceding Claims, characterized in that it constitutes an inertia flywheel forming a reaction plate of a friction clutch.

## Patentansprüche

1. Torsionsdämpfeinrichtung von der Art, die über zwei koaxiale Teile (15, 16) verfügt, welche mit der Möglichkeit zur begrenzten Drehung im Verhältnis zueinander angebracht sind, wobei ein erster Teil (15) zwei ringförmige, im wesentlichen parallel verlaufende Flansche (19, 20) und ein zweiter Teil (16) zwei parallel verlaufende Abdeckungen (38, 39) aufweist, die axial zwischen den beiden Flanschen eingesetzt sind, sowie Federn (18), die im wesentlichen am Umfang zwischen Sockeln (24) angeordnet sind, welche am genannten ersten Teil schwenkbar angebracht sind, wobei jeder Sockel auf der Rückseite im Verhältnis zur Feder (18) eine Aushöhlung (55) mit abgerundetem Boden aufweist, in welche zwei parallel verlaufende Zapfen (49), die sich im wesentlichen am Umfang erstrecken und jeweils zu zwei radialen Armen (48) der genannten Abdeckungen (38, 39) gehören, bei einer relativen Rotation zwischen den genannten beiden koaxialen Teilen eingreifen können, gekennzeichnet durch Mittel zur festen drehbeweglichen Verbindung (76, 77–80, 82) der genannten Abdeckungen, die geeignet sind, die genannten radialen Arme und die Zapfen der beiden vorgenannten Abdeckungen jeweils paarweise am Umfang anzugleichen.

2. Einrichtung nach Anspruch 1, dadurch gekennzeichnet, daß die genannten Mittel zur festen drehbeweglichen Verbindung aus wenigstens einem Vorsprung (76) bestehen, der parallel zur gemeinsamen Achse der beiden Teile verläuft und an einer der Abdeckungen befestigt ist und in ein entsprechendes Loch (77) der anderen Abdeckung eingreift.

3. Einrichtung nach Anspruch 2, dadurch gekennzeichnet, daß sie wenigstens einen derartigen Vorsprung und ein derartiges Loch enthält, die zwischen jedem Paar radialer Arme (48) der genannten Abdeckungen entsprechend vorgesehen sind.

4. Einrichtung nach Anspruch 3, dadurch gekennzeichnet, daß für jede Abdeckung mit einer geraden Anzahl radialer Arme solche Vorsprünge (76) an jedem zweiten radialen Arm (48) am Umfang befestigt sind, während die anderen radialen Arme über die entsprechenden Löcher (77) verfügen.

5. Einrichtung nach Anspruch 1, dadurch gekennzeichnet, daß die genannten Mittel zur festen drehbeweglichen Verbindung aus einem Ring (80) des genannten zweiten Teils (16) bestehen, der an der Außenfläche mit Längsrippen (81) versehen ist, und daß jede Abdeckung Ausschnitte (82) aufweist, die den genannten Rippen entsprechen, welche entlang einer kreisförmigen Innenkante derselben vorgesehen sind, wobei diese Abdeckung gleitend mit dem genannten Ring in Eingriff steht und die genannten Ausschnitte (82) so beschaffen sind, daß sich die radialen Arme der genannten Abdeckungen jeweils paarweise gegenüberliegen.

6. Einrichtung nach einem der vorherigen Ansprüche, dadurch gekennzeichnet, daß elastische Mittel (40, 41) auf an sich bekannte Weise zwischen den beiden Abdeckungen eingesetzt sind, um diese in Richtung von Flächen (35 a, 36 a) zu drücken; die jeweils parallel zum genannten zweiten Teil (16) verlaufen, vorzugsweise unter Einfügung von Reibbelägen (45), wobei diese Anordnung einen Drehmomentbegrenzer bildet.

7. Einrichtung nach einem der vorherigen Ansprüche, dadurch gekennzeichnet, daß sie ein Schwungrad bildet, welches als Gegendruckplatte einer Reibungskupplung dient.

# FIG.1

# FIG.3

# FIG. 2

# FIG. 4

# FIG. 5